# EUROPEAN PATENT SPECIFICATION

(11) **EP 3 842 912 B1**
(45) Date of publication and mention of the grant of the patent: **11.06.2025**
(21) Application number: 19851430.9
(22) Date of filing: 10.07.2019
(51) Int. Cl.: G06F 3/0488, G06F 3/0482, G06F 3/0481, G06F 9/451, H04M 1/72469

(54) **DISPLAY INTERFACE PROCESSING METHOD AND MOBILE TERMINAL**
ANZEIGESCHNITTSTELLENVERARBEITUNGSVERFAHREN UND MOBILES ENDGERÄT
PROCÉDÉ DE TRAITEMENT D'INTERFACE D'AFFICHAGE ET TERMINAL MOBILE

(30) Priority: 24.08.2018 CN 201810971901
(43) Date of publication of application: 30.06.2021
(73) Proprietor: VIVO MOBILE COMMUNICATION CO., LTD., Dongguan, Guangdong 523860 (CN)
(72) Inventor: QU, Run, Dongguan, Guangdong 523860 (CN); ZENG, Chuixing, Dongguan, Guangdong 523860 (CN)
(74) Representative: Lavoix
(86) International application number: PCT/CN2019/095403
(87) International publication number: WO 2020/038143

(56) References cited:
- EP-A1- 2 687 964
- CN-A- 101 692 195
- CN-A- 102 236 512
- CN-A- 106 775 267
- CN-A- 107 734 164
- CN-A- 109 254 719
- US-A1- 2008 139 190
- US-A1- 2013 227 483
- US-A1- 2013 278 710
- US-A1- 2014 092 100
- US-A1- 2016 132 192
- US-A1- 2017 205 990
- US-A1- 2018 164 963

## Description

### CROSS-REFERENCE TO RELATED APPLICATION

This application claims priority to Chinese Patent Application No. 201810971901.3, filed in China on August 24, 2018.

### TECHNICAL FIELD

The present disclosure relates to the field of communication technologies, and in particular, to a processing method of a display interface and a mobile terminal.

### BACKGROUND

With the rapid development of electronic technologies, the function of a mobile terminal such as a mobile phone or a tablet computer is increasingly powerful, and electronics have become an indispensable part of people's work and life and also an important entertainment tool for people. When people use mobile terminals such as mobile phones or tablet computers for entertainment, especially for entertainment such as watching videos in full screen and playing large competitive games, most of them do not want to be interfered by popup windows and vibrations when events such as phone calls, short messages, application messages and advertisements occur during the entertainment.

At present, in order to enable users to have a good user experience when playing a game, a game mode is set up in a mobile phone, a tablet computer or the like in the related art. However, the game mode generally requires the users to set before the game starts, the setting is cumbersome, and the start setting of the game mode takes a lot of time, which makes most of the users do not turn on the game mode in advance or often forget to turn on the game mode; and if the game mode is turned on during the game, the users need to switch from the game interface to the background and then perform the game mode setting as described above.

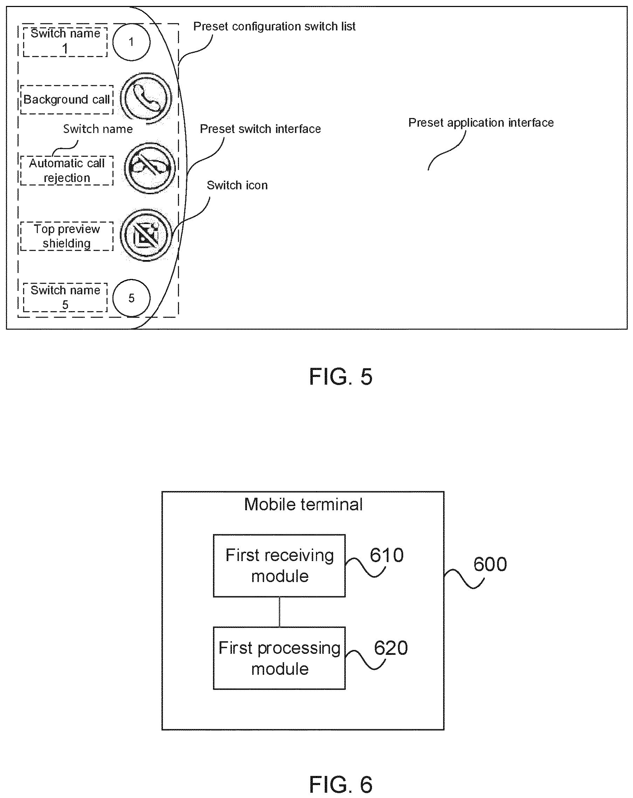

US2018/164963A1 shows in FIG. 6 an operation when a plurality of setting menu items corresponding to an executed setting application are formed as pages which can be scrolled up and down. Referring to FIG. 6, while a setting screen 601b is being displayed on the touch screen 151, if a preset touch gesture, e.g., an upward drag touch input is applied, a penal region 620 is withdrawn. And quick icons 621, 622, 623 of setting menu items provided onto the second page are displayed on the panel region 620. Then, if an up and down scroll operation is applied to the panel region 620, the setting screen 601b corresponding to the second page layered below the panel region 620 is scrolled. As a result, a setting screen corresponding to a third page is gradually output. While the page scroll is being performed, the quick icons 621, 622, 623, output to the panel region 620 are also scrolled. In this case, the UX provided is capable of easily and rapidly controlling objects output to a currently-displayed screen with a single hand, by using a panel region.

US2008/139190A1 shows in FIG. 2 an options menu integrated in a certain application (game) which allows enabling a Don't Disturb Mode (DDM) status or modus. The options menu is implemented as a graphical user interface with a check button 21 adapted to switch on or off said DDM modus. The mode can be activated/deactivated manually via the game menu or automatically when the user or the system puts another application to the foreground. With reference to table 1, the contents of table 1 may be implemented as a list of settings in the DDM implementation of the device in a fixed way, or they can be configured by the application. In this way different applications could use different settings for the DDM. So, it may be favorable for an application in which optical information is prominent to have DDM settings that use acoustic indications in order not to interrupt the displayed optical information. An application in which audio information is prominent like an MP3 player or a radio, optical or vibrating indication of an event may be used in order not to interrupt the audio. In another embodiment, the contents of table 1 may also be user configurable through a device menu and/or through an application menu.

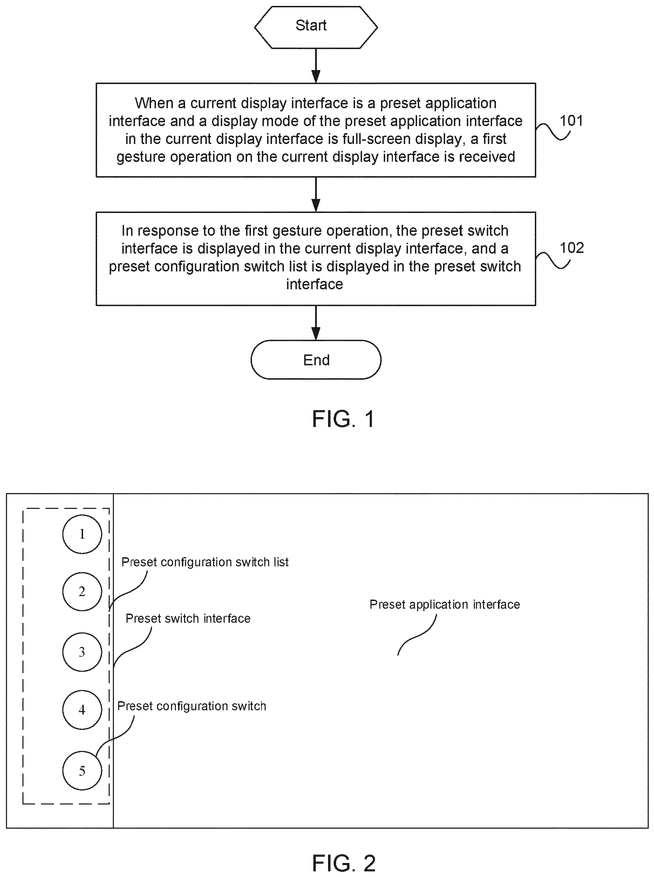

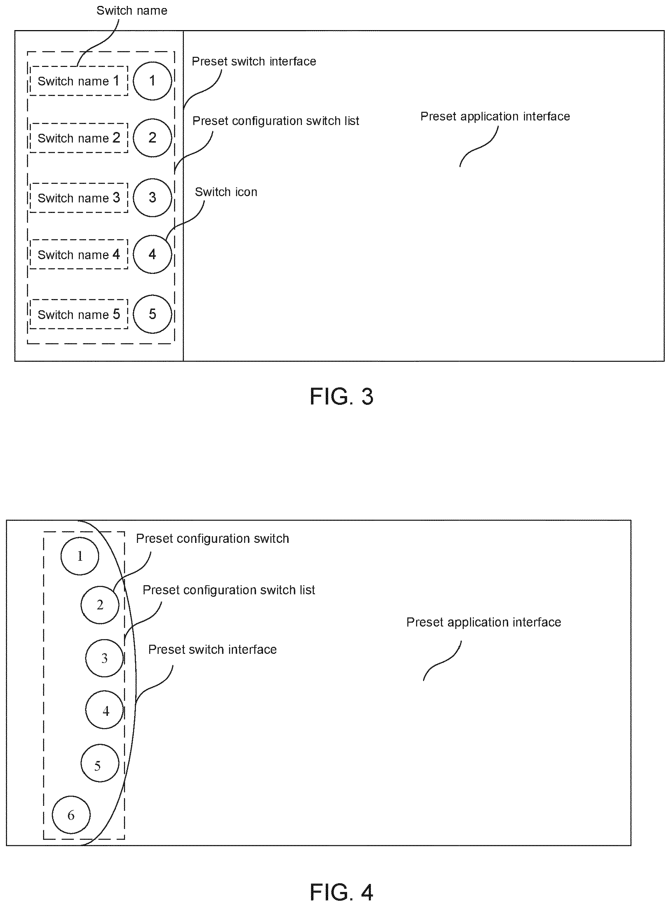

CN106775267A discloses a display method for a function menu of a game plugin. Referring to FIG. 2, when a game application installed on the terminal device is being executed, the terminal device may automatically run the game plugin of the game application, and may display the floating icon of the game plugin in the form of a floating layer. When a tap operation on the floating icon of the game plugin is detected by the terminal device, the floating icon is hidden and a main function menu of the game plugin is displayed on the game interface in the form of a floating layer. As shown in FIG. 3, the main function menu includes at least one function menu button and at least one function option. If the user clicks a function menu button, a corresponding secondary function menu button is displayed, or use at least one auxiliary function provided by the target game plug-in by clicking the function option.

US2017/205990A1 illustrates in FIG. 4 a schematic block diagram illustrating an operation for switching an electronic device from displaying a single first application interface to simultaneously displaying the first application interface and a shortcut operation interface on the display screen of the mobile device. Referring to FIG.4, when the electronic device detects that a user performs a tap operation for the first application icon on a display screen 1, the electronic device may respond to the first application corresponding to the first application icon, runs the first application, and displays in full screen the first application interface of the first application in the display screen 1. When the display screen 1 of the electronic device displays the first application interface in full-screen mode or in another mode, the electronic may detect a shortcut operation beginning at identifier 4 performed on the first application interface. In response, the electronic device may determine whether the shortcut operation is a predetermined operation. If the shortcut operation is a predetermined operation, the electronic device may directly display the shortcut operation interface in a second region 3, on the display screen 1. Thus, the display screen 1 of the electronic device is capable of conveniently entering a screen-split mode.

US2016/132192A1 in FIG. 3A illustrates an example transparent device settings menu 141. The graphical indicator may include non-persistent notification indicator 133 and persistent indicator 135. As illustrated by arrow 139, the user may provide an input to drag or scroll the notifications indicators to reveal the device settings menu 141. The device settings menu 141 may include components for network settings, accessory settings, device settings, cloud settings, capture settings, audio settings, location settings, and battery settings. The device settings menu141 may be semi-transparent not to interrupt the media displayed by the computing device 122. FIGS. 5A and 5B illustrate an example gesture to sequence from surfacing notification to device settings menu. In FIG. 5A, the graphical indicator 133 is minimally visible near the top edge of the screen. Rather than an obtrusive pop-up message, the user is informed that a notification is ready for viewing by the appearance of the graphical indicator 133.

US2013/278710A1 shows in FIGS. 14A to 14I the hide and redisplay of a first row of icons. Referring to FIG. 14A, as indicated by the "up arrow" and the text "hide", by providing the "up" directional input, the user may hide the user interface. In response to this user input, in FIG. 14B, the user interface is hidden. In FIG. 14C, the user has provided input to redisplay the user interface. For example, the user may provide the "down" directional input. In response, the user interface is redisplayed, and the previously selected item is again selected.

US2013/227483A1 in FIG. 4 illustrates the initiation of a sidebar 444 on an electronic device 201. State 401 shows an application displayed on the display 204 of the electronic device 201, where the application presents a list of content items 410. A user may provide a user input in relation to one of the content items 411. On pressing down on this content item for 100ms, the content item 411 becomes 'marked' or 'selected'. Some indication may be provided to the user to shown that the content item 411 is now marked, such as by providing a border 425 around the content item 411 as shown in state 402. If the user performs a gesture exceeding a time interval, also referred to as a 'long press' 430, in relation to the content item, then there is a further change to state 403. Once the 'long press' 430 has occurred, a sidebar 444 appears. The sidebar 444 may appear instantly or through a transitional animation, such as by sliding in from off the screen or outside the window of the present application in which the sidebar 444 is invoked. Once the user releases 440 from the 'long press' there is a further transition to state 404 where the sidebar 444 is 'pinned' to the screen.

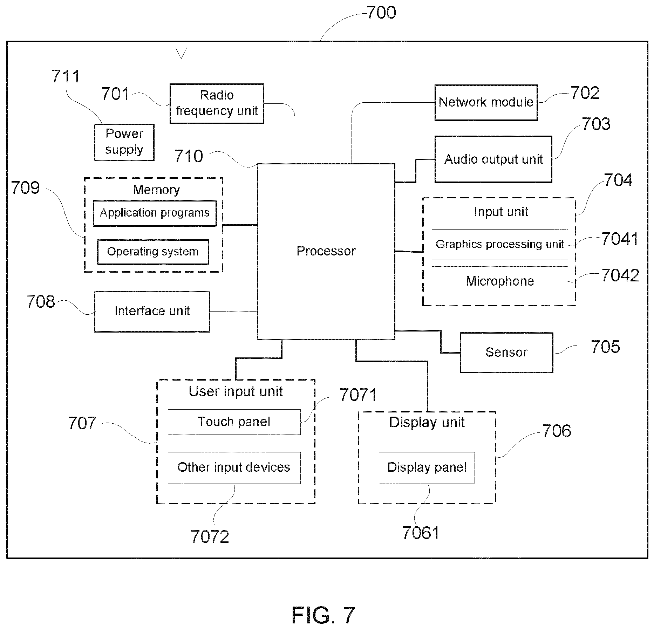

In document 8 (EP2687964A1), Figure 7 illustrates a further mode of interaction with the menu 405 by which a user can expand the display of the overflow menu 460 from the first, relatively small configuration to the second, relatively large configuration 760. Referring to Figure 7, the user provides a different, second user input continuous with the first user input by performing a swipe from the press of the overflow menu 460 out away from the edge of the display 204 such that the overflow menu expands out with the user's swipe from its first, relatively small configuration to the second, relatively large configuration 760.

Document 9 (US2014/092100A1) discloses a dial menu which is used to interact with an application on a computing device. With reference to FIGS. 1A to 3, dial menu 102 has a list of options or commands arranged along a non-linear path. Dial menu 102 is segmental, semicircular, or greater than a semicircle but less than a circle. The user may retract dial menu 102 by rotating the dial menu in a first direction (e.g., clockwise) until all the menu options 116 are rotated off screen 100. In response, computing device 106 displays only a tab 202 representing the head of the dial menu as shown in FIG. 2. This effectively removes dial menu 102 from screen 100 so the user has an unobstructed view of one or more contents on the screen.

Obviously, the setting of an anti-interference mode such as the game mode or the like in the related art is relatively cumbersome, which affects the user experience.

### SUMMARY

The present disclosure provides a processing method of a display interface and a mobile terminal, so as to solve a problem that the setting of an anti-interference mode such as a game mode or the like in the related art is relatively cumbersome.

In order to solve the above technical problem, the present disclosure is implemented as follows.

In a first aspect, embodiments of the present disclosure provide a processing method of a display interface which is defined in claim 1.

In a second aspect, the embodiments of the present disclosure provide a mobile terminal which is defined in claim 5.

In a third aspect, the embodiments of the present disclosure provide a mobile terminal. The mobile terminal includes a processor, a memory, and a computer program stored in the memory and executed on the processor. The computer program, when executed by the processor, implements steps in the processing method of the display interface as described above.

In a fourth aspect, the embodiments of the present disclosure provide a computer-readable storage medium. The computer-readable storage medium stores thereon a computer program that, when executed by a processor, implements steps in the processing method of the display interface as described above.

In the embodiments of the present disclosure, when the current display interface is the preset application interface, and the display mode of the preset application interface in the current display interface is full-screen display, the preset switch interface including the preset configuration switch list is displayed in the current display interface according to the first gesture operation on the current display interface, which enables users to simply and quickly set the running performance and/or a preset interference event when the mobile terminal displays the preset application interface, simplifies the setting operation of the users, and improves the user experience.

### BRIEF DESCRIPTION OF THE DRAWINGS

In order to describe technical solutions in embodiments of the present disclosure more clearly, accompanying drawings to be used in the description of the embodiments of the present disclosure will be introduced briefly. However, the accompanying drawings to be described below are merely some embodiments of the present disclosure, and a person of ordinary skill in the art may also obtain other drawings according to those drawings without paying any creative effort.
FIG. 1 is a schematic diagram of a process of a processing method of a display interface, in accordance with the embodiments of the present disclosure;
FIG. 2 is a first schematic diagram showing a display of a preset switch interface in a current display interface, in accordance with the embodiments of the present disclosure;
FIG. 3 is a second schematic diagram showing a display of the preset switch interface in the current display interface, in accordance with the embodiments of the present disclosure;
FIG. 4 is a third schematic diagram showing a display of the preset switch interface in the current display interface, in accordance with the embodiments of the present disclosure;
FIG. 5 is a fourth schematic diagram showing a display of the preset switch interface in the current display interface, in accordance with the embodiments of the present disclosure;
FIG. 6 is a schematic diagram showing a structure of a mobile terminal, in accordance with the embodiments of the present disclosure; and
FIG. 7 is a schematic diagram showing a hardware architecture of a mobile terminal, in accordance with the embodiments of the present disclosure.

### DETAILED DESCRIPTION

To make the technical problem to be solved, technical solutions and advantages of the present disclosure more clearly, description will be made in detail below with reference to the accompanying drawings and specific embodiments.

Referring to FIG. 1, FIG. 1 shows a schematic diagram of a process of a processing method of a display interface, in accordance with the embodiments of the present disclosure. The embodiments of the present disclosure provide a processing method of a display interface, which may include the following steps.

In step 101, when a current display interface is a preset application interface, and a display mode of the preset application interface in the current display interface is full-screen display, a first gesture operation on the current display interface is received.

In the embodiments of the present disclosure, a mobile terminal receives a user operation to start a preset application, so that when the current display interface of the mobile terminal is a preset application interface and the preset application interface is displayed in full screen, the user operation is detected to judge whether the user triggers a display of a preset switch interface, thereby setting running performance and/or a preset interference event. In this way, it is possible to simplify the setting operation of the user about the running performance and/or the preset interference event during a use process of the preset application.

In the embodiments of the present disclosure, the preset application interface is a preset game interface or a preset video playing interface. In addition, in the embodiments of the present disclosure, the first gesture operation may be a preset gesture operation. For example, the first gesture operation may include, but is not limited to, at least one of a double-click operation, a press operation, a pinch-in operation, a drag operation, a sliding operation, and a stroking operation. That is, the first gesture operation may be one of the gesture operations described above, or may also be a combined operation of two or more of the above gesture operations.

In step 102, in response to the first gesture operation, the preset switch interface is displayed in the current display interface, and a preset configuration switch list is displayed in the preset switch interface.

In the embodiments of the present disclosure, as shown in FIGS. 2 and 4, after the first gesture operation on the current display interface is received in step 101, in response to the first gesture operation, the mobile terminal calls the preset switch interface in which the preset configuration switch list is displayed in the current display interface. In this way, the user can quickly set the running performance and/or the preset interference event through an operation on the preset configuration switch list, which simplifies the user's setting operation and improves the user experience. In the embodiments of the present disclosure, the preset switch interface is displayed in the current display interface at a preset transparency, thereby reducing an effect of the preset switch interface on the preset application interface. The preset transparency may be set in advance by default or through the user's selection. For example, the preset transparency may be 40% to 60%, so that the preset switch interface is displayed translucently in the current display interface. In addition, if the user does not execute the first gesture operation on the current display interface, the preset switch interface will not be called to be displayed in the current display interface, that is, the preset switch interface is in a hidden state. In this way, it is possible to avoid affecting the user's use operation on the preset application interface.

In the embodiments of the present disclosure, the preset configuration switch list may include at least one preset configuration switch for realizing preset running performance configuration and/or preset interference event configuration, that is, the preset configuration switches in the preset configuration switch list may include: a first configuration switch for configuring the preset running performance and a second configuration switch for configuring an execution mode of the preset interference event. Specifically, the first configuration switch may be a starting switch of the running performance preset by the user or a system, for example, the first configuration switch may be an "electronic sports mode" switch. The second configuration switch may be a starting switch of the execution mode of the preset interference event preset by the user or the system, for example, the second configuration switch may be a "background call" switch, an "automatic call rejection" switch, a "top preview shielding" switch, a "virtual hidden floating key" switch, or the like.

In an example of the present disclosure, taking the preset application interface being the preset game interface as an example, when the user operates the mobile terminal to perform the preset game interface, and the preset game interface is displayed in a full-screen mode in the current display interface, the user executes the first gesture operation on the current display interface (i.e., the preset game interface), and the mobile terminal receives the first gesture operation, and calls the preset switch interface in the current display interface in response to the first gesture operation. In this case, the user can view the preset configuration switch list displayed in the preset switch interface, and can quickly and simply set the running performance and/or the preset interference event by operating the preset configuration switches in the preset configuration switch list. That is, the user may turn on the preset configuration switches such as the "electronic sports mode" switch, the "background call" switch, the "automatic call rejection" switch, the "top preview shielding" switch, the "virtual hidden floating key" switch according to requirements, thereby enabling operation performance of the game to be improved and avoiding the interference of the preset interference event on the game operation. Here, the user may realize the turn-on of the preset configuration switches through a gesture operation such as a tap to realize the setting of the relevant running performance configuration and/or the preset interference event configuration.

In the embodiments of the present disclosure, when the current display interface is the preset application interface, and the display mode of the preset application interface in the current display interface is full-screen display, the preset switch interface including the preset configuration switch list is displayed in the current display interface according to the first gesture operation on the current display interface, which enables the user to simply and quickly set the running performance and/or the preset interference event when the mobile terminal displays the preset application interface, simplifies the setting operation of the user, and improves the user experience.

In a preferred embodiment of the present disclosure, in consideration of convenience of the user operation, the first gesture operation may be a first sliding operation along a first preset direction from a preset side of the current display interface. The step 102 of displaying the preset switch interface in the current display interface in response to the first gesture operation may include: in response to the first sliding operation, controlling the preset switch interface to slide from the preset side to a predetermined position region of the current display interface along the first preset direction and to be displayed in the predetermined position region. In the embodiments of the present disclosure, through the simple and convenient first sliding operation, the mobile terminal can control the preset switch interface to be called in a sliding way from the preset side along the first preset direction, which can better adapt to and meet an operation habit of the user. In order to increase interest of the display of the preset switch interface, the mobile terminal may also control the preset switch interface to display a first preset special display effect when the preset switch interface is controlled to be called from the preset side in a sliding way, for example, the mobile terminal may control the preset switch interface to display a bounce-back effect after controlling the preset switch interface to slide to the predetermined position region.

In addition, in the embodiments of the present disclosure, to fit the operation habit of the user, the preset side may be a side that is convenient for the user to operate with a finger (generally, a thumb by default) and determined based on at least one of a spatial posture of the mobile terminal, a habitual holding posture of the user, a current holding posture of the user, and a type of the preset application interface. For example, in an example, the mobile terminal is in a landscape state, the preset application interface is the preset game interface, and then the preset side of the current display interface is a side of the current display interface proximate to a left hand.

In the embodiments of the present disclosure, as shown in FIGS. 2 to 5, in the preset switch interface, the preset configuration switches in the preset configuration switch list may be arranged and displayed along the longest side of the preset switch interface, which makes it is convenient for the user to view and operate the preset configuration switch. Preferably, in the embodiments of the present disclosure, in order to make it is convenient for the user to find and operate the preset configuration switch, so that the user can quickly and conveniently find the preset configuration switch needed, the preset configuration switch may include a switch icon and a switch name. As shown in FIGS. 3 and 5, the switch icon of the preset configuration switch may be displayed on a side proximate to the longest side of the preset switch interface, and the switch name corresponding to the switch icon may be displayed from the switch icon towards a direction away from the longest side of the preset switch interface. In the embodiments of the present disclosure, a form of image-text combination can make the preset configuration switches more easily to be identified, facilitate an accurate and rapid of the operation of the user.

In the embodiments of the present disclosure, in order to reduce the influence of the preset switch interface on the preset application interface, the display of the preset switch interface in the current display interface is limited in area and size. Therefore, the preset configuration switches in the preset configuration switch list may not be completely displayed in the preset switch interface. After the step 102 of displaying the preset switch interface in the current display interface in response to the first gesture operation, the processing method further includes the following steps: receiving a second gesture operation on the preset switch interface; and in response to the second gesture operation, performing a switching display of the preset configuration switches in the preset configuration switch list in the preset switch interface. In the embodiments of the present disclosure, the user may realize the switching display of the preset configuration switches in the preset configuration switch list through the second gesture operation on the preset switch interface, so that it is convenient for the user to find and operate the preset configuration switches. In addition, in the embodiments of the present disclosure, the second gesture operation may be a preset gesture operation, for example, the second gesture operation may include, but is not limited to, at least one of a double-click operation, a press operation, a pinch-in operation, a drag operation, a sliding operation, and a stroking operation.

In the embodiments of the present disclosure, an interface shape of the preset switch interface may be various, for example, it may be a rectangle, a sphere or an arc, which may be set according to actual design needs or set by the user according to needs.

Specifically, the preset switch interface is a rectangular interface formed proximate to a preset side of the current display interface, and the second gesture operation is a second sliding operation along a long side of the preset switch interface. In the embodiments of the present disclosure, as shown in FIGS. 2 and 3, the user executes the first gesture operation on the current display interface. The mobile terminal receives the first gesture operation, and displays the preset switch interface in the current display interface in response to the first gesture operation. The preset switch interface is a rectangular interface, and one side of the preset switch interface is proximate to the preset side of the current display interface. In this way, when the user is viewing the preset configuration switch list displayed in the preset switch interface, the switching display of the preset configuration switches in the preset configuration switch list is realized through the second sliding operation along the long side of the preset switch interface. In the embodiments of the present disclosure, the second sliding operation is consistent with a gesture operation habit (e.g., dragging and clicking) of the user on the preset application interface, which may reduce the interference on the gesture operation habit of the user. Preferably, in the embodiments of the present disclosure, the long side of the preset switch interface may be flush with and have a same length as the preset side of the current display interface.

Alternatively, the preset switch interface is an arc-shaped interface formed proximate to the preset side of the current display interface, and the second gesture operation is a third sliding operation along an arc-shaped side of the preset switch interface. In the embodiments of the present disclosure, as shown in FIGS. 4 and 5, the user executes the first gesture operation on the current display interface. The mobile terminal receives the first gesture operation, and in response to the first gesture operation, the mobile terminal displays the preset switch interface that is an arc-shaped interface in the current display interface. One side of the preset switch interface is proximate to the preset side of the current display interface, and another side of the preset switch interface away from the preset side is an arc-shaped side. In this way, when the user is viewing the preset configuration switch list displayed in the preset switch interface, the switching display of the preset configuration switches in the preset configuration switch list is realized through the third sliding operation along the arc-shaped side of the preset switch interface. In the embodiments of the present disclosure, the third sliding operation is consistent with the gesture operation habit (e.g., dragging, and clicking, etc.) of the user on the preset application interface, which may reduce the interference on the gesture operation habit of the user. The preset configuration switches in the preset configuration switch list may be arranged and displayed along the arc-shaped side of the preset switch interface. In addition, preferably, in the embodiments of the present disclosure, a side of the preset switch interface opposite to the arc-shaped side may be flush with and have a same length as the preset side of the current display interface.

In the embodiments of the present disclosure, compared with the preset switch interface formed as the rectangular interface, the preset switch interface formed as the arc-shaped interface may make a display area of the preset switch interface larger, which may further increase a display number of the preset configuration switches within a limited display area, thereby reducing the lookup operations and time of the user to find the preset configuration switches needed.

In a preferred embodiment of the present disclosure, after the step 102 of displaying the preset switch interface in the current display interface in response to the first gesture operation, the processing method may further include the following steps: receiving the third gesture operation on the current display interface; and in response to the third gesture operation, canceling the display of the preset switch interface in the current display interface. In the embodiments of the present disclosure, after performing the first gesture operation in the current display interface to display the preset switch interface in the current display interface, the user may execute the third gesture operation on the current display interface, so as to make the mobile terminal receive the third gesture operation and control the preset switch interface to be hidden (folded) in the current display interface in response to the third gesture operation, thereby making the preset switch interface folded up according to the user needs, and thus avoiding affecting the use operation of the user on the preset application interface. In addition, in the embodiments of the present disclosure, the third gesture operation may be a preset gesture operation. For example, the third gesture operation may include, but is not limited to, at least one of a double-click operation, a press operation, a pinch-in operation, a drag operation, a sliding operation, and a stroking operation.

Preferably, in the embodiments of the present disclosure, in consideration of convenience of the user operation, the third gesture operation may include: a fourth sliding operation along a second preset direction towards a preset side of the current display interface. Canceling the display of the preset switch interface in the current display interface in response to the third gesture operation may include: in response to the fourth sliding operation, controlling the preset switch interface to slide from a predetermined position region of the current display interface to the preset side along the second preset direction until the preset switch interface disappears in the current display interface. In the embodiments of the present disclosure, through the simple and convenient fourth sliding operation, the mobile terminal can control the preset switch interface to be folded in a sliding way from the predetermined position region of the current display interface along the second preset direction towards the preset side, which can better adapt to and meet the operation habit of the user. The second preset direction may be a direction opposite to the first preset direction or a direction having a preset angle with the first preset direction. Preferably, the preset angle is an obtuse angle. The mobile terminal may also control the preset switch interface to display a second preset special display effect when the preset switch interface is controlled to be folded. For example, the mobile terminal may control the preset switch interface to be formed into a preset shape when controlling the preset switch interface to slide to the preset side. The preset shape may be a water-drop shape and the like, thereby increasing the interest of the folding of the preset switch interface. A specific form of the second preset special display effect in the embodiments of the present disclosure is not limited.

In the processing method of the display interface provided by the embodiments of the present disclosure, when the current display interface is the preset application interface, and the display mode of the preset application interface in the current display interface is full-screen display, the preset switch interface including the preset configuration switch list is displayed in the current display interface according to the first gesture operation on the current display interface, which makes the user can simply and quickly set the running performance and/or the preset interference event when the mobile terminal displays the preset application interface, thereby simplifying the setting operation of the user and improving the user experience.

Based on the above method, the embodiments of the present disclosure provide a mobile terminal used to implement the above method.

Referring to FIG. 6, it shows a schematic structural diagram of the mobile terminal, in accordance with the embodiments of the present disclosure. The embodiments of the present disclosure provide a mobile terminal 600 that may include a first receiving module 610 and a first processing module 620.

The first receiving module 610 is used to receive a first gesture operation on a current display interface when the current display interface is a preset application interface, and a display mode of the preset application interface in the current display interface is full-screen display.

The first processing module 620 is used to display a preset switch interface in the current display interface, and display a preset configuration switch list in the preset switch interface in response to the first gesture operation.

In a preferred embodiment of the present disclosure, in consideration of convenience of the user operation, the first gesture operation may be a first sliding operation along a first preset direction from a preset side of the current display interface; and the first processing module 620 may include a first processing unit.

The first processing unit is used to, in response to the first sliding operation, control the preset switch interface to slide to a predetermined position region of the current display interface from the preset side along the first preset direction and to be displayed in the predetermined position region.

In the embodiments of the present disclosure, in order to reduce an influence of the preset switch interface on the preset application interface, the display of the preset switch interface in the current display interface is limited in area and size. Therefore, the preset configuration switches in the preset configuration switch list may not be completely displayed in the preset switch interface. The mobile terminal 600 further includes: a second receiving module and a second processing module.

The second receiving module is used to receive a second gesture operation on the preset switch interface.

The second processing module is used to, in response to the second gesture operation, perform a switching display of the preset configuration switches in the preset configuration switch list in the preset switch interface.

Specifically, the preset switch interface is a rectangular interface formed proximate to a preset side of the current display interface, and the second gesture operation is a second sliding operation along a long side of the preset switch interface. Alternatively, the preset switch interface is an arc-shaped interface formed proximate to the preset side of the current display interface, and the second gesture operation is a third sliding operation along the arc-shaped side of the preset switch interface.

In addition, in a preferred embodiment of the present disclosure, the mobile terminal 600 may further include a third receiving module and a third processing module.

The third receiving module is used to receive a third gesture operation on the current display interface.

The third processing module is used to, in response to the third gesture operation, cancel a display of the preset switch interface in the current display interface.

Specifically, in the embodiments of the present disclosure, the third gesture operation may include a fourth sliding operation along a second preset direction towards the preset side of the current display interface, and the third processing module may include a second processing unit.

The second processing unit is used to, in response to the fourth sliding operation, control the preset switch interface to slide from a predetermined position region of the current display interface to the preset side along the second preset direction until the preset switch interface disappears from the current display interface.

In a preferred embodiment of the present disclosure, the preset configuration switches in the preset configuration switch list may include: a first configuration switch for configuring the preset running performance and a second configuration switch for configuring an execution mode of the preset interference event.

The mobile terminal provided by the embodiments of the present disclosure can implement processes realized by the mobile terminal in the method embodiments of FIGS. 1 to 5, and in order to avoid repetition, details will not be repeated herein.

In a case where the current display interface is the preset application interface, and the display mode of the preset application interface in the current display interface is full-screen display, according to the first gesture operation on the current display interface, the mobile terminal provided by the embodiments of the present disclosure display the preset switch interface including the preset configuration switch list in the current display interface, which makes the user can simply and quickly set the running performance and/or the preset interference event when the mobile terminal is in the preset application interface, thereby simplifying the setting operation of the user and improving the user experience.

FIG. 7 is a schematic diagram showing a hardware architecture of a mobile terminal for implementing the embodiments of the present disclosure.

The mobile terminal 700 includes, but is not limited to, components such as a radio frequency unit 701, a network module 702, an audio output unit 703, an input unit 704, a sensor 705, a display unit 706, a user input unit 707, an interface unit 708, a memory 709, a processor 710, and a power supply 711. A person skilled in the art may understand that the mobile terminal shown in FIG. 7 does not constitute a limitation to the mobile terminal, and the mobile terminal may include more or fewer components than the mobile terminal shown in the figure, or a combination of certain components, or a different arrangement of components. In the embodiments of the present disclosure, the mobile terminal includes, but is not limited to, a mobile phone, a tablet computer, a notebook computer, a palmtop computer, a vehicle-mounted terminal, a wearable device or a pedometer.

The processor 710 is used to receive a first gesture operation in a current display interface when the current display interface is a preset application interface and a display mode of the preset application interface in the current display interface is full-screen display; and display a preset switch interface in the current display interface in response to the first gesture operation, wherein a preset configuration switch list is displayed in the preset switch interface.

In the embodiments of the present disclosure, when the current display interface is the preset application interface, and the display mode of the preset application interface in the current display interface is full-screen display, the preset switch interface including the preset configuration switch list is displayed in the current display interface according to the first gesture operation on the current display interface, which enables the user to simply and quickly set the running performance and/or the preset interference event when the mobile terminal is in the preset application interface, simplifies the setting operation of the user, and improves the user experience.

It will be understood that, in the embodiments of the present disclosure, the radio frequency unit 701 may be used to receive and send signals during a process of sending and receiving information or a call. Specifically, the radio frequency unit 701 is used to receive downlink data from a base station, and send the downlink data to the processor 710 to process; in addition, the radio frequency unit 701 is used to send uplink data to the base station. Generally, the radio frequency unit 701 includes, but is not limited to, an antenna, at least one amplifier, a transceiver, a coupler, a low noise amplifier and a duplexer. In addition, the radio frequency unit 701 may also communicate with a network and other devices through a wireless communication system.

The mobile terminal provides wireless broadband Internet access for the user through the network module 702, such as helping the user send and receive emails, browse web pages and access streaming media.

The audio output unit 703 may convert audio data received by the radio frequency unit 701 or the network module 702 or stored in the memory 709 into audio signals and output the audio signals as sound. Moreover, the audio output unit 703 may further provide audio output (e.g., a call signal reception sound, a message reception sound, etc.) related to a specific function performed by the mobile terminal 700. The audio output unit 703 includes a speaker, a buzzer, and a receiver.

The input unit 704 is used to receive audio or video signals. The input unit 704 may include a graphics processing unit (GPU) 7041 and a microphone 7042. The GPU 7041 processes image data of static pictures or videos obtained by an image capture device (e.g., a camera) in a video capture mode or an image capture mode. Processed image frames may be displayed on the display unit 706. The image frames processed by the GPU 7041 may be stored in the memory 709 (or other storage media) or sent via the radio frequency unit 701 or the network module 702. The microphone 7042 may receive sound, and is able to process such sound into audio data. In a telephone call mode, the processed audio data may be converted for output into a format that may be sent to a mobile communication base station via the radio frequency unit 701.

The mobile terminal 700 further includes at least one sensor 705, such as a light sensor, a motion sensor and other sensors. Specifically, the light sensor includes an ambient light sensor and a proximity sensor. The ambient light sensor may adjust a brightness of a display panel 7061 according to a brightness of the ambient light. The proximity sensor may turn off the display panel 7061 and/or backlight when the mobile terminal 700 is moved near an ear. As a kind of motion sensor, an accelerometer sensor may detect magnitudes of accelerations in all directions (generally three axes), and may detect the magnitude and direction of gravity when the accelerometer sensor is motionless, and may be used to identify a gesture of the mobile terminal (e.g., switching the screen between a landscape mode and a portrait mode, related games, and magnetometer attitude calibration), vibration recognition related functions (e.g., pedometer and tapping), etc. The sensors 705 may further include a fingerprint sensor, a pressure sensor, an iris sensor, a molecular sensor, a gyroscope, a barometer, a hygrometer, a thermometer and an infrared sensor, which will not be described in detail herein.

The display unit 706 is used to display information input by the user or information provided to the user. The display unit 706 may include the display panel 7061, and the display panel 7061 may be configured in a form of a liquid crystal display (LCD), an organic light-emitting diode (OLED), or the like.

The user input unit 707 may be used to receive input numerical or character information, and generate key input signals related to the user setting and function control of the mobile terminal. Specifically, the user input unit 707 includes a touch panel 7071 and other input devices 7072. The touch panel 7071, also known as a touch screen, may collect the user's touch operations on or near the touch panel 7071 (e.g., the user's operations on or near the touch panel 7071 by using any suitable object or an accessory such as a finger or a touch pen). The touch panel 7071 may include two parts, i.e., a touch detection device and a touch controller. The touch detection device detects a user's touch position, detects a signal generated by the touch operation, and transmits the signal to the touch controller; and the touch controller receives touch information from the touch detection device, converts the touch information into coordinates of a touch point, sends the coordinates of the touch point to the processor 710, receives a command sent by the processor 710 and executes the command. In addition, the touch panel 7071 may be implemented by using various types of touch panels such as a resistive touch panel, a capacitive touch panel, an infrared touch panel, or a surface acoustic wave touch panel. In addition to the touch panel 7071, the user input unit 707 may also include other input devices 7072. Specifically, the other input devices 7072 may include, but are not limited to, a physical keyboard, function keys (e.g., volume control keys, and a switch key, etc.), a trackball, a mouse and an operating lever, which will not be described in detail herein.

Further, the touch panel 7071 may cover the display panel 7061. After the touch panel 7071 detects a touch operation on or near it, the touch panel 7071 transmits the touch operation to the processor 710 to determine a type of a touch event, and then the processor 710 provides a corresponding visual output on the display panel 7061 according to the type of the touch event. Although in FIG. 7, the touch panel 7071 and the display panel 7061 are used as two separate components to implement input and output functions of the mobile terminal, in some embodiments, the touch panel 7071 and the display panel 7061 may be integrated to implement the input and output functions of the mobile terminal, which is not specifically limited herein.

The interface unit 708 is an interface for connecting an external device and the mobile terminal 700. For example, the external device may include a wired or wireless headset port, an external power supply (or battery charger) port, a wired or wireless data port, a memory card port, a port for connecting a device with an identification module, an audio input/output (I/O) port, a video I/O port, and an earphone port. The interface unit 708 may be used to receive input (e.g., data information or power) from the external device and transmit the received input to one or more elements in the mobile terminal 700, or may be used to transmit data between the mobile terminal 700 and the external device.

The memory 709 may be used to store software programs and various data. The memory 709 may mainly include a program storage region and a data storage region. The program storage region may store an operating system and at least one application program required by functions (e.g., a sound playing function and an image playing function). The data storage region may store data (e.g., audio data and a phone book) created according to use of a mobile phone. In addition, the memory 709 may include a high-speed random access memory, and may further include a non-volatile memory, such as at least one magnetic disk storage device, a flash memory device, or other volatile solid-state storage devices.

The processor 710 is a control center of the mobile terminal, connects all parts of the entire mobile terminal through various interfaces and lines, and executes various functions of the mobile terminal and processes data by running or executing software programs and/or modules stored in the memory 709 and invoking data stored in the memory 709, thereby performing overall monitoring on the mobile terminal. The processor 710 may include one or more processing units. Preferably, an application processor and a modem processor may be integrated into the processor 710. The application processor mainly deals with operating systems, user interfaces and application programs, and the modem processor mainly deals with wireless communication. It will be understood that the modem processor may not be integrated into the processor 710.

The mobile terminal 700 may further include the power supply 711 (e.g., a battery) for supplying power to all components. Preferably, the power supply 711 may be logically connected to the processor 710 through a power management system, so that functions such as charging management, discharging management, and power consumption management are achieved through the power management system.

In addition, the mobile terminal 700 includes some functional modules that are not shown, which will not be described in detail herein.

Preferably, the embodiments of the present disclosure further provide a mobile terminal, which includes a processor 710, a memory 709, and a computer program that is stored in the memory 709 and executed on the processor 710. The computer program, when executed by the processor 710, implements all processes of the embodiments of the processing method of the display interface, and can achieve the same technical effects. In order to avoid repetition, details will not be repeated herein.

The embodiments of the present disclosure further provide a computer-readable storage medium. The computer-readable storage medium stores thereon a computer program that, when executed by a processor, implements all processes of the processing method of the display interface, and can achieve the same technical effects. In order to avoid repetition, details will not be repeated herein. The computer-readable storage medium may be, for example, a read-only memory (ROM), a random access memory (RAM), a magnetic disk or an optical disk.

It will be noted that, the term "comprise" or any other variants thereof herein are intended to cover a non-exclusive inclusion, so that a process, a method, a manufacture or a device that includes a series of elements not only includes those elements, but also includes other elements not explicitly listed, or includes elements inherent to the process, the method, the article or the device. In a case where there is no more limitation, an element defined by the phrase "comprising a/an ..." does not exclude existence of other identical elements in a process, a method, an article or a device that includes the element.

Through the description of the above embodiments, a person skilled in the art will clearly understand that, the methods in the above embodiments may be implemented by software and a necessary general-purpose hardware platform, and of course, may also be implemented by hardware, but in many cases, the former is a better implementation. On a basis of such understanding, the technical solution of the present disclosure may be embodied in a form of a software product in essence or in a part contributing to the related art. The computer software product is stored in a storage medium (e.g., a ROM/RAM, a diskette or an optical disk), and includes several instructions for causing a terminal (which may be a mobile phone, a computer, a server, an air conditioner or a network side device) to perform the methods described in all embodiments of the present disclosure.

## Claims

1. A processing method of a display interface, comprising:
when a current display interface is a preset application interface, and a display mode of the preset application interface is full-screen display, receiving (101) a first gesture operation on the current display interface; wherein the preset application interface is a preset game interface or a preset video playing interface; the first gesture operation is a first sliding operation along a first preset direction from a preset side of the current display interface;
in response to the first gesture operation, displaying (102) a preset switch interface in the current display interface, and controlling the preset switch interface to slide from the preset side to a predetermined position region of the current display interface along the first preset direction, and to be displayed in the predetermined position region; wherein a preset configuration switch list is displayed in the preset switch interface, the preset switch interface contains a plurality of selectable icons each corresponding to a respective configuration switch in the preset configuration switch list, and the icons are arranged along a second preset direction;
after the displaying (102) the preset switch interface in the current display interface in response to the first gesture operation, receiving a second gesture operation on the preset switch interface; and
in response to the second gesture operation, performing a switching display of preset configuration switches in the preset configuration switch list in the preset switch interface; wherein the switching display comprises displaying a corresponding switch name appearing next to each respective icon in the first preset direction;
the preset switch interface is a rectangular interface formed proximate to a preset side of the current display interface, and the second gesture operation is a second sliding operation along the second preset direction which is along a long side of the preset switch interface that is substantially perpendicular to the first preset direction; or
the preset switch interface is an arc-shaped interface formed proximate to the preset side of the current display interface, the arc-shaped interface has an arc-shaped side opposed to the preset side, and the second gesture operation is a third sliding operation along the arc-shaped side of the preset switch interface that is predominantly perpendicular to the first preset direction.

2. The processing method according to claim 1, wherein after displaying (102) the preset switch interface in the current display interface in response to the first gesture operation, the processing method further comprises:
receiving a third gesture operation on the current display interface; and
in response to the third gesture operation, canceling a display of the preset switch interface in the current display interface.

3. The processing method according to claim 2, wherein the third gesture operation includes: a fourth sliding operation along the second preset direction towards a preset side of the current display interface; and
in response to the third gesture operation, canceling the display of the preset switch interface in the current display interface includes:
in response to the fourth sliding operation, controlling the preset switch interface to slide from a predetermined position region of the current display interface to the preset side along the second preset direction until the preset switch interface disappears from the current display interface.

4. The processing method according to claim 1, wherein the preset configuration switches in the preset configuration switch list include: a first configuration switch for configuring preset running performance and a second configuration switch for configuring an execution mode of a preset interference event.

5. A mobile terminal (600), comprising:
a first receiving module (610) used to receive a first gesture operation on a current display interface when the current display interface is a preset application interface and a display mode of the preset application interface is full-screen display; wherein the preset application interface is a preset game interface or a preset video playing interface; the first gesture operation is a first sliding operation along a first preset direction from a preset side of the current display interface;
a first processing module (620) used to display a preset switch interface in the current display interface in response to the first gesture operation, and to control the preset switch interface to slide from the preset side to a predetermined position region of the current display interface along the first preset direction, and to be displayed in the predetermined position region; wherein a preset configuration switch list is displayed in the preset switch interface, the preset switch interface contains a plurality of selectable icons each corresponding to a respective configuration switch in the preset configuration switch list, and the icons are arranged along a second preset direction;
a second receiving module used to receive a second gesture operation on the preset switch interface; and
a second processing module used to, in response to the second gesture operation, perform a switching display of preset configuration switches in the preset configuration switch list in the preset switch interface; wherein the switching display comprises displaying a corresponding switch name appearing next to each respective icon in the first preset direction;
the preset switch interface is a rectangular interface formed proximate to a preset side of the current display interface, and the second gesture operation is a second sliding operation along the second preset direction which is along a long side of the preset switch interface that is substantially perpendicular to the first preset direction; or
the preset switch interface is an arc-shaped interface formed proximate to the preset side of the current display interface, the arc-shaped interface has an arc-shaped side opposed to the preset side, and the second gesture operation is a third sliding operation along the arc-shaped side of the preset switch interface that is predominantly perpendicular to the first preset direction.

6. The mobile terminal (600) according to claim 5, wherein the mobile terminal (600) further comprises:
a third receiving module used to receive a third gesture operation on the current display interface; and
a third processing module used to, in response to the third gesture operation, cancel a display of the preset switch interface in the current display interface.

7. The mobile terminal (600) according to claim 6, wherein the third gesture operation includes a fourth sliding operation along the second preset direction towards a preset side of the current display interface; and
the third processing module includes:
a second processing unit used to, in response to the fourth sliding operation, control the preset switch interface to slide from a predetermined position region of the current display interface to the preset side along the second preset direction until the preset switch interface disappears from the current display interface.

8. A computer program comprising processor-executable instructions which, when the computer program is executed by a A-mobile terminal (700), comprising: a memory (709) and a processor (710), the memory (709) being configured to store the computer program, the processor (710) being configured to execute the computer program, cause the mobile terminal to implement the processing method of the display interface according to any one of claims 1 to 4.

9. A computer-readable storage medium, wherein the computer-readable storage medium stores thereon the computer program of claim 8.

## Patentansprüche

1. Verarbeitungsverfahren für eine Anzeigeschnittstelle, das Folgendes umfasst:
wenn eine aktuelle Anzeigeschnittstelle eine voreingestellte Anwendungsschnittstelle ist und ein Anzeigemodus der voreingestellten Anwendungsschnittstelle eine Vollbildanzeige ist, Empfangen (101) einer ersten Gestenbetätigung auf der aktuellen Anzeigeschnittstelle; wobei die voreingestellte Anwendungsschnittstelle eine voreingestellte Spielschnittstelle oder eine voreingestellte Videowiedergabeschnittstelle ist; die erste Gestenbetätigung eine erste Gleitbetätigung entlang einer ersten voreingestellten Richtung von einer voreingestellten Seite der aktuellen Anzeigeschnittstelle ist;
als Reaktion auf die erste Gestenbetätigung, Anzeigen (102) einer voreingestellten Schalterschnittstelle in der aktuellen Anzeigeschnittstelle und Steuern der voreingestellten Schalterschnittstelle, um von der voreingestellten Seite zu einem vorbestimmten Positionsbereich der aktuellen Anzeigeschnittstelle entlang der ersten voreingestellten Richtung zu gleiten und in dem vorbestimmten Positionsbereich angezeigt zu werden; wobei eine voreingestellte Konfigurationsschalterliste in der voreingestellten Schalterschnittstelle angezeigt wird, die voreingestellte Schalterschnittstelle eine Vielzahl von auswählbaren Symbolen enthält, die jeweils einem Konfigurationsschalter in der voreingestellten Konfigurationsschalterliste entsprechen, und die Symbole entlang einer zweiten voreingestellten Richtung angeordnet sind;
nach dem Anzeigen (102) der voreingestellten Schalterschnittstelle in der aktuellen Anzeigeschnittstelle als Reaktion auf die erste Gestenbetätigung, Empfangen einer zweiten Gestenbetätigung auf der voreingestellten Schalterschnittstelle; und
als Reaktion auf die zweite Gestenbetätigung, Durchführen einer Umschaltanzeige von voreingestellten Konfigurationsschaltern in der voreingestellten Konfigurationsschalterliste in der voreingestellten Schalterschnittstelle; wobei die Umschaltanzeige das Anzeigen eines entsprechenden Schalternamens umfasst, der neben jedem entsprechenden Symbol in der ersten voreingestellten Richtung erscheint;
die voreingestellte Schaltschnittstelle eine rechteckige Schnittstelle ist, die in der Nähe einer voreingestellten Seite der aktuellen Anzeigeschnittstelle ausgebildet ist, und die zweite Gestenbetätigung eine zweite Gleitbetätigung entlang der zweiten voreingestellten Richtung ist, die entlang einer langen Seite der voreingestellten Schaltschnittstelle verläuft, die im Wesentlichen senkrecht zu der ersten voreingestellten Richtung ist; oder
die voreingestellte Schaltschnittstelle eine bogenförmige Schnittstelle ist, die in der Nähe der voreingestellten Seite der aktuellen Anzeigeschnittstelle ausgebildet ist, die bogenförmige Schnittstelle eine bogenförmige Seite hat, die der voreingestellten Seite gegenüberliegt, und die zweite Gestenbetätigung eine dritte Gleitbetätigung entlang der bogenförmigen Seite der voreingestellten Schaltschnittstelle ist, die überwiegend senkrecht zu der ersten voreingestellten Richtung ist.

2. Verarbeitungsverfahren nach Anspruch 1, wobei nach dem Anzeigen (102) der voreingestellten Schalterschnittstelle in der aktuellen Anzeigeschnittstelle als Reaktion auf die erste Gestenbetätigung das Verarbeitungsverfahren ferner umfasst:
Empfangen einer dritten Gestenbetätigung auf der aktuellen Anzeigeschnittstelle; und
als Reaktion auf die dritte Gestenbetätigung die Anzeige der voreingestellten Schalterschnittstelle in der aktuellen Anzeigeschnittstelle zu löschen.

3. Verarbeitungsverfahren nach Anspruch 2, wobei die dritte Gestenbetätigung Folgendes umfasst: eine vierte Gleitbetätigung entlang der zweiten voreingestellten Richtung zu einer voreingestellten Seite der aktuellen Anzeigeschnittstelle; und
als Reaktion auf die dritte Gestenbetätigung die Anzeige der voreingestellten Schalterschnittstelle in der aktuellen Anzeigeschnittstelle zu löschen:
als Reaktion auf die vierte Gleitbetätigung, Steuern der voreingestellten Schalterschnittstelle, um von einem vorbestimmten Positionsbereich der aktuellen Anzeigeschnittstelle zu der voreingestellten Seite entlang der zweiten voreingestellten Richtung zu gleiten, bis die voreingestellte Schalterschnittstelle von der aktuellen Anzeigeschnittstelle verschwindet.

4. Verarbeitungsverfahren nach Anspruch 1, wobei die voreingestellten Konfigurationsschalter in der Liste der voreingestellten Konfigurationsschalter umfassen: einen ersten Konfigurationsschalter zum Konfigurieren der voreingestellten Laufleistung und einen zweiten Konfigurationsschalter zum Konfigurieren eines Ausführungsmodus eines voreingestellten Störungsereignisses.

5. Mobiles Endgerät (600), umfassend:
ein erstes Empfangsmodul (610), das verwendet wird, um eine erste Gestenbetätigung auf einer aktuellen Anzeigeschnittstelle zu empfangen, wenn die aktuelle Anzeigeschnittstelle eine voreingestellte Anwendungsschnittstelle ist und ein Anzeigemodus der voreingestellten Anwendungsschnittstelle eine Vollbildanzeige ist; wobei die voreingestellte Anwendungsschnittstelle eine voreingestellte Spielschnittstelle oder eine voreingestellte Videowiedergabeschnittstelle ist; die erste Gestenbetätigung eine erste Gleitbetätigung entlang einer ersten voreingestellten Richtung von einer voreingestellten Seite der aktuellen Anzeigeschnittstelle ist;
ein erstes Verarbeitungsmodul (620), das verwendet wird, um eine voreingestellte Schalterschnittstelle in der aktuellen Anzeigeschnittstelle als Reaktion auf die erste Gestenbedienung anzuzeigen und die voreingestellte Schalterschnittstelle zu steuern, um von der voreingestellten Seite zu einem vorbestimmten Positionsbereich der aktuellen Anzeigeschnittstelle entlang der ersten voreingestellten Richtung zu gleiten und in dem vorbestimmten Positionsbereich angezeigt zu werden; wobei eine voreingestellte Konfigurationsschalterliste in der voreingestellten Schalterschnittstelle angezeigt wird, die voreingestellte Schalterschnittstelle eine Vielzahl von auswählbaren Symbolen enthält, die jeweils einem Konfigurationsschalter in der voreingestellten Konfigurationsschalterliste entsprechen, und die Symbole entlang einer zweiten voreingestellten Richtung angeordnet sind;
ein zweites Empfangsmodul, das zum Empfangen einer zweiten Gestenbedienung auf der voreingestellten Schalterschnittstelle verwendet wird; und
ein zweites Verarbeitungsmodul, das verwendet wird, um als Reaktion auf die zweite Gestenbedienung eine Schaltanzeige von voreingestellten Konfigurationsschaltern in der voreingestellten Konfigurationsschalterliste in der voreingestellten Schalterschnittstelle durchzuführen; wobei die Schaltanzeige das Anzeigen eines entsprechenden Schalternamens umfasst, der neben jedem jeweiligen Symbol in der ersten voreingestellten Richtung erscheint;
die voreingestellte Schaltschnittstelle eine rechteckige Schnittstelle ist, die in der Nähe einer voreingestellten Seite der aktuellen Anzeigeschnittstelle ausgebildet ist, und die zweite Gestenbetätigung eine zweite Gleitbetätigung entlang der zweiten voreingestellten Richtung ist, die entlang einer langen Seite der voreingestellten Schaltschnittstelle verläuft, die im Wesentlichen senkrecht zu der ersten voreingestellten Richtung ist; oder
die voreingestellte Schaltschnittstelle eine bogenförmige Schnittstelle ist, die in der Nähe der voreingestellten Seite der aktuellen Anzeigeschnittstelle ausgebildet ist, die bogenförmige Schnittstelle eine bogenförmige Seite hat, die der voreingestellten Seite gegenüberliegt, und die zweite Gestenbetätigung eine dritte Gleitbetätigung entlang der bogenförmigen Seite der voreingestellten Schaltschnittstelle ist, die überwiegend senkrecht zu der ersten voreingestellten Richtung ist.

6. Mobiles Endgerät (600) nach Anspruch 5, wobei das mobile Endgerät (600) ferner Folgendes umfasst:
ein drittes Empfangsmodul, das dazu dient, eine dritte Gestenbetätigung auf der aktuellen Anzeigeschnittstelle zu empfangen; und
ein drittes Verarbeitungsmodul, das dazu dient, als Reaktion auf die dritte Gestenbetätigung eine Anzeige der voreingestellten Schalterschnittstelle in der aktuellen Anzeigeschnittstelle zu löschen.

7. Mobiles Endgerät (600) nach Anspruch 6, wobei die dritte Gestenbetätigung eine vierte Gleitbetätigung entlang der zweiten voreingestellten Richtung hin zu einer voreingestellten Seite der aktuellen Anzeigeschnittstelle umfasst; und
das dritte Verarbeitungsmodul umfasst:
eine zweite Verarbeitungseinheit, die verwendet wird, um als Reaktion auf die vierte Gleitbetätigung die voreingestellte Schalterschnittstelle so zu steuern, dass sie von einem vorbestimmten Positionsbereich der aktuellen Anzeigeschnittstelle zu der voreingestellten Seite entlang der zweiten voreingestellten Richtung gleitet, bis die voreingestellte Schalterschnittstelle von der aktuellen Anzeigeschnittstelle verschwindet.

8. Ein Computerprogramm mit prozessorausführbaren
Anweisungen, die bei Ausführung des Computerprogramms durch ein
mobiles Endgerät (700) Folgendes umfassen: einen Speicher (709) und einen Prozessor (710), wobei der Speicher (709) zum Speichern des Computerprogramms konfiguriert ist,
wobei der Prozessor (710) so konfiguriert ist, dass er das Computerprogramm ausführt, das mobile Endgerät veranlasst,
das Verarbeitungsverfahren der Anzeigeschnittstelle nach einem der Ansprüche 1 bis 4 zu implementieren.

9. Computerlesbares Speichermedium, wobei das
computerlesbare Speichermedium darauf das Computerprogramm nach Anspruch 8 speichert.

## Revendications

1. Procédé de traitement d'une interface d'affichage, comprenant :
lorsqu'une interface d'affichage actuelle est une interface d'application prédéfinie et qu'un mode d'affichage de l'interface d'application prédéfinie est l'affichage plein écran, recevoir (101) une première opération gestuelle sur l'interface d'affichage actuelle ; l'interface d'application prédéfinie étant une interface de jeu prédéfinie ou une interface de lecture vidéo prédéfinie, la première opération gestuelle est une première opération de glissement le long d'une première direction prédéfinie à partir d'un côté prédéfini de l'interface d'affichage actuelle ;
en réponse à la première opération gestuelle, afficher (102) une interface de commutation prédéfinie dans l'interface d'affichage actuelle, et commander l'interface de commutation prédéfinie pour qu'elle glisse du côté prédéfini vers une zone de position prédéterminée de l'interface d'affichage actuelle le long de la première direction prédéfinie, et pour qu'elle soit affichée dans la zone de position prédéterminée ; dans lequel une liste de commutateurs de configuration prédéfinie est affichée dans l'interface de commutation prédéfinie, l'interface de commutation prédéfinie contient une pluralité d'icônes sélectionnables correspondant chacune à un commutateur de configuration respectif dans la liste de commutateurs de configuration prédéfinie, et les icônes sont agencées le long d'une deuxième direction prédéfinie ;
après l'affichage (102) de l'interface de commutation prédéfinie dans l'interface d'affichage actuelle en réponse à la première opération gestuelle, recevoir une deuxième opération gestuelle sur l'interface de commutation prédéfinie ; et
en réponse à la deuxième opération gestuelle, effectuer un affichage de commutation des commutateurs de configuration prédéfinis dans la liste des commutateurs de configuration prédéfinis dans l'interface de commutation prédéfinie ; dans lequel l'affichage de commutation comprend l'affichage d'un nom de commutateur correspondant apparaissant à côté de chaque icône respective dans la première direction prédéfinie ;
l'interface de commutation prédéfinie est une interface rectangulaire formée à proximité d'un côté prédéfini de l'interface d'affichage actuelle, et la deuxième opération gestuelle est une deuxième opération de glissement le long de la deuxième direction prédéfinie qui est le long d'un côté long de l'interface de commutation prédéfinie qui est sensiblement perpendiculaire à la première direction prédéfinie ; ou
l'interface de commutation prédéfinie est une interface en forme d'arc formée à proximité du côté prédéfini de l'interface d'affichage actuelle, l'interface en forme d'arc a un côté en forme d'arc opposé au côté prédéfini, et la deuxième opération gestuelle est une troisième opération de glissement le long du côté en forme d'arc de l'interface de commutation prédéfinie qui est principalement perpendiculaire à la première direction prédéfinie.

2. Procédé de traitement selon la revendication 1, dans lequel, après avoir affiché (102) l'interface de commutation prédéfinie dans l'interface d'affichage actuelle en réponse à la première opération gestuelle, le procédé de traitement comprend en outre :
recevoir une troisième opération gestuelle sur l'interface d'affichage actuelle ; et
en réponse à la troisième opération gestuelle, annuler l'affichage de l'interface de commutation prédéfinie dans l'interface d'affichage actuelle.

3. Procédé de traitement selon la revendication 2, dans lequel la troisième opération gestuelle comprend : une quatrième opération de glissement le long de la deuxième direction prédéfinie vers un côté prédéfini de l'interface d'affichage actuelle ; et
en réponse à la troisième opération gestuelle, l'annulation de l'affichage de l'interface de commutation prédéfinie dans l'interface d'affichage actuelle comprend :
en réponse à la quatrième opération de glissement, commander l'interface de commutation prédéfinie pour qu'elle glisse d'une zone de position prédéterminée de l'interface d'affichage actuelle vers le côté prédéfini le long de la deuxième direction prédéfinie jusqu'à ce que l'interface de commutation prédéfinie disparaisse de l'interface d'affichage actuelle.

4. Procédé de traitement selon la revendication 1, dans lequel les commutateurs de configuration prédéfinis dans la liste des commutateurs de configuration prédéfinis comprennent :
un premier commutateur de configuration pour configurer les performances de fonctionnement prédéfinies et un second commutateur de configuration pour configurer un mode d'exécution d'un événement de brouillage prédéfini.

5. Terminal mobile (600), comprenant :
un premier module de réception (610) utilisé pour recevoir une première opération gestuelle sur une interface d'affichage actuelle lorsque l'interface d'affichage actuelle est une interface d'application prédéfinie et que le mode d'affichage de l'interface d'application prédéfinie est l'affichage plein écran ; l'interface d'application prédéfinie étant une interface de jeu prédéfinie ou une interface de lecture vidéo prédéfinie ; la première opération gestuelle est une première opération de glissement le long d'une première direction prédéfinie à partir d'un côté prédéfini de l'interface d'affichage actuelle ;
un premier module de traitement (620) utilisé pour afficher une interface de commutation prédéfinie dans l'interface d'affichage actuelle en réponse à la première opération gestuelle, et pour commander l'interface de commutation prédéfinie afin qu'elle glisse du côté prédéfini vers une région de position prédéterminée de l'interface d'affichage actuelle le long de la première direction prédéfinie, et qu'elle soit affichée dans la région de position prédéterminée ; dans lequel une liste de commutateurs de configuration prédéfinie est affichée dans l'interface de commutation prédéfinie, l'interface de commutation prédéfinie contient une pluralité d'icônes sélectionnables correspondant chacune à un commutateur de configuration respectif dans la liste de commutateurs de configuration prédéfinie, et les icônes sont agencées le long d'une deuxième direction prédéfinie ;
un deuxième module de réception utilisé pour recevoir une deuxième opération gestuelle sur l'interface de commutation prédéfinie ; et
un deuxième module de traitement utilisé pour, en réponse à la deuxième opération gestuelle, effectuer un affichage de commutation des commutateurs de configuration prédéfinis dans la liste des commutateurs de configuration prédéfinis dans l'interface de commutation prédéfinie ; dans lequel l'affichage de commutation comprend l'affichage d'un nom de commutateur correspondant apparaissant à côté de chaque icône respective dans la première direction prédéfinie ;
l'interface de commutation prédéfinie est une interface rectangulaire formée à proximité d'un côté prédéfini de l'interface d'affichage actuelle, et la deuxième opération gestuelle est une deuxième opération de glissement le long de la deuxième direction prédéfinie qui est le long d'un côté long de l'interface de commutation prédéfinie qui est sensiblement perpendiculaire à la première direction prédéfinie ; ou
l'interface de commutation prédéfinie est une interface en forme d'arc formée à proximité du côté prédéfini de l'interface d'affichage actuelle, l'interface en forme d'arc a un côté en forme d'arc opposé au côté prédéfini, et la deuxième opération gestuelle est une troisième opération de glissement le long du côté en forme d'arc de l'interface de commutation prédéfinie qui est principalement perpendiculaire à la première direction prédéfinie.

6. Terminal mobile (600) selon la revendication 5, dans lequel le terminal mobile (600) comprend en outre :
un troisième module de réception utilisé pour recevoir une troisième opération gestuelle sur l'interface d'affichage actuelle ; et
un troisième module de traitement utilisé pour, en réponse à la troisième opération gestuelle, annuler l'affichage de l'interface de commutation prédéfinie dans l'interface d'affichage actuelle.

7. Terminal mobile (600) selon la revendication 6, dans lequel la troisième opération gestuelle comprend une quatrième opération de glissement le long de la deuxième direction prédéfinie vers un côté prédéfini de l'interface d'affichage actuelle ; et
le troisième module de traitement comprend :
une deuxième unité de traitement utilisée pour, en réponse à la quatrième opération de glissement, commander l'interface de commutation prédéfinie afin qu'elle glisse d'une zone de position prédéterminée de l'interface d'affichage actuelle vers le côté prédéfini le long de la deuxième direction prédéfinie jusqu'à ce que l'interface de commutation prédéfinie disparaisse de l'interface d'affichage actuelle.

8. Programme informatique comprenant des instructions exécutables par processeur qui, lorsque le programme informatique est exécuté par un
terminal mobile (700), comprenant : une mémoire (709) et un
processeur (710), la mémoire (709) étant configurée pour stocker le programme informatique, le processeur
(710) étant configuré pour exécuter le programme
informatique, faire en sorte que le terminal mobile mette en œuvre
le procédé de traitement de l'interface d'affichage selon l'une quelconque des revendications 1 à 4.

9. Support de stockage lisible par ordinateur, dans lequel le support de stockage lisible par ordinateur stocke le
programme informatique de la revendication 8.
